# EUROPEAN PATENT APPLICATION

(11) **EP 4 564 829 A1**
(43) Date of publication of application: **04.06.2025**
(21) Application number: 23845677.6
(22) Date of filing: 28.07.2023
(51) Int. Cl.: H04N 21/435

(54) **METHOD FOR SENDING COMMENT IN LIVE-STREAMING ROOM, METHOD FOR RECEIVING COMMENT IN LIVE-STREAMING ROOM, AND RELATED DEVICE**

(30) Priority: 28.07.2022 CN 202210902595
(71) Applicant: Beijing Zitiao Network Technology Co., Ltd., Beijing 100190 (CN)
(72) Inventor: LAI, Ke, Beijing 100028 (CN); LI, Yijie, Beijing 100028 (CN)
(74) Representative: Dentons UK and Middle East LLP
(86) International application number: PCT/CN2023/109786
(87) International publication number: WO 2024/022473

(57) **Abstract**

Provided in the present disclosure are a method for sending a comment in a live streaming room, a method for receiving a comment in a live streaming room, and a related device. The method for sending a comment in a live streaming room includes: in response to a trigger operation on a first control on a live streaming room page, displaying a first window on the live streaming room page, the first window including identifiers of at least one piece of candidate multimedia data; in response to a selection operation on an identifier of first multimedia data among the identifiers of the at least one piece of candidate multimedia data, determining, according to the selection operation, first multimedia data corresponding to the identifier of the first multimedia data; and in response to a trigger operation on a second control on the live streaming room page, displaying on the live streaming room page a comment corresponding to the first multimedia data, the comment including an entry for playing the first multimedia data.

## Description

### CROSS-REFERENCING OF RELEVANT APPLICATIONS

The present disclosure claims the priority of the Chinese patent application filed with the State Intellectual Property Office of the People's Republic of China on July 28, 2022, application No. 202210902595.4, with the title of the invention "a method for sending a comment in a live streaming room, a method for receiving a comment in a live streaming room, and a related device", the entire contents of which are incorporated by reference in the present disclosure.

### TECHNICAL FIELD

The present disclosure relates to the technical field of computers, and in particular, to a method for sending a comment in a live streaming room, a method for receiving a comment in a live streaming room, and a related device.

### BACKGROUND

In related art, the comment function of live streaming rooms is single and cannot meet the diverse interactive needs of users, resulting in affecting the user experience.

### SUMMARY

In view of this, the purpose of embodiments of the present disclosure is to propose a method for sending a comment in a live streaming room, a method for receiving a comment in a live streaming room, and a related device.

On the basis of the above purpose, in a first aspect of embodiments of the present disclosure, provided is a method for sending a comment in a live streaming room, including:
in response to a trigger operation on a first control on a live streaming room page, displaying a first window on the live streaming room page, the first window including identifiers of at least one piece of candidate multimedia data;
in response to a selection operation on an identifier of first multimedia data among the identifiers of the at least one piece of candidate multimedia data, determining, according to the selection operation, first multimedia data corresponding to the identifier of the first multimedia data; and
in response to a trigger operation on a second control on the live streaming room page, displaying on the live streaming room page a comment corresponding to the first multimedia data, the comment including an entry for playing the first multimedia data.

In a second aspect of embodiments of the present disclosure, provided is a method for receiving a comment in a live streaming room, including:
displaying a comment corresponding to first multimedia data on a live streaming room page; and
in response to a trigger operation on the comment corresponding to the first multimedia data, displaying a third window on the live streaming room page, and playing the first multimedia data in the third window.

In a third aspect of embodiments of the present disclosure, provided is an apparatus for sending a comment in a live streaming room, including:
a first display module, configured to: in response to a trigger operation on a first control on a live streaming room page, display a first window on the live streaming room page, the first window including identifiers of at least one piece of candidate multimedia data;
a determination module, configured to: in response to a selection operation on an identifier of first multimedia data among the identifiers of the at least one piece of candidate multimedia data, determine, according to the selection operation, first multimedia data corresponding to the identifier of the first multimedia data; and
a second display module, configured to: in response to a trigger operation on a second control on the live streaming room page, display on the live streaming room page a comment corresponding to the first multimedia data, the comment including an entry for playing the first multimedia data.

In a fourth aspect of embodiments of the present disclosure, provided is an apparatus for receiving a comment in a live streaming room, including:
an acquisition module, configured to: display a comment corresponding to first multimedia data on a live streaming room page; and
a playback module, configured to: in response to a trigger operation on the comment corresponding to the first multimedia data, display a third window on the live streaming room page, and play the first multimedia data in the third window.

In a fifth aspect of embodiments of the present disclosure, provided is a computer device, including one or more processors, a memory, and one or more programs, where the one or more programs are stored in the memory and executed by the one or more processors, and the programs include instructions for executing the method according to the first aspect or the second aspect.

In a sixth aspect of embodiments of the present disclosure, provided is a non-volatile computer-readable storage medium, containing a computer program, which, when executed by one or more processors, causes the processors to execute the method according to the first aspect or the second aspect.

In a seventh aspect of embodiments of the present disclosure, provided is a computer program product, including computer program instructions, which, when run on a computer, cause the computer to execute the method according to the first aspect or the second aspect.

It can be seen from the above that, with regard to the method for sending a comment in a live streaming room, the method for receiving a comment in a live streaming room, and the related device provided by embodiments of the present disclosure, in the method for commenting in a live streaming room provided by an embodiment of the present disclosure compared with the related comments in the live streaming room being merely in a comment mode of text and emoticon comments, a user of a first terminal can send comments corresponding to multimedia data in the comments in the live streaming room, and the comments include playback entries of the multimedia data, such that users of other terminals can share the multimedia data in the comments in the live streaming room, and other users can also view the specific content of the multimedia data, thereby improving the interaction efficiency and enhancing the product interaction performance.

### BRIEF DESCRIPTION OF THE DRAWINGS

In order to more clearly illustrate the technical solutions in the present disclosure or related technology, the accompanying drawings required for use in the description of the embodiments or related technology will be briefly introduced below. It will be obvious that the accompanying drawings described below are only embodiments of the present disclosure, and for those of ordinary skill in the art, other accompanying drawings can be obtained based on these accompanying drawings without creative labor.
Fig. 1 is a schematic diagram of an exemplary system 100 provided by an embodiment of the present disclosure;
Fig. 2A shows a schematic diagram of an exemplary page according to an embodiment of the present disclosure;
Fig. 2B shows a schematic diagram of an exemplary page according to an embodiment of the present disclosure;
Fig. 2C shows a schematic diagram of an exemplary page according to an embodiment of the present disclosure;
Fig. 2D shows a schematic diagram of an exemplary page according to an embodiment of the present disclosure;
Fig. 2E shows a schematic diagram of an exemplary page according to an embodiment of the present disclosure;
Fig. 2F shows a schematic diagram of an exemplary page according to an embodiment of the present disclosure;
Fig. 2G shows a schematic diagram of an exemplary page according to an embodiment of the present disclosure;
Fig. 2H shows a schematic diagram of an exemplary page according to an embodiment of the present disclosure;
Fig. 2I shows a schematic diagram of an exemplary page according to an embodiment of the present disclosure;
Fig. 2J shows a schematic diagram of an exemplary page according to an embodiment of the present disclosure;
Fig. 2K shows a schematic diagram of an exemplary page according to an embodiment of the present disclosure;
Fig. 3A shows a schematic diagram of an exemplary page according to an embodiment of the present disclosure;
Fig. 3B shows a schematic diagram of an exemplary page according to an embodiment of the present disclosure;
Fig. 3C shows a schematic diagram of an exemplary page according to an embodiment of the present disclosure;
Fig. 3D shows a schematic diagram of an exemplary page according to an embodiment of the present disclosure;
Fig. 3E shows a schematic diagram of an exemplary page according to an embodiment of the present disclosure;
Fig. 4 shows a schematic flowchart of an exemplary method provided by an embodiment of the present disclosure;
Fig. 5 shows a schematic flowchart of another exemplary method provided by an embodiment of the present disclosure;
Fig. 6 shows a schematic diagram of an exemplary apparatus provided by an embodiment of the present disclosure;
Fig. 7 shows a schematic diagram of another exemplary apparatus provided by an embodiment of the present disclosure;
Fig. 8 shows a schematic diagram of the hardware structure of an exemplary computer device provided by an embodiment of the present disclosure.

### DETAILED DESCRIPTION

In order to make the objectives, technical solutions and advantages of embodiments of the present disclosure more clearly understood, the embodiments of the present disclosure are further described in detail below in combination with specific embodiments and with reference to the accompanying drawings.

It should be noted that, unless otherwise defined, the technical terms or scientific terms used in the embodiments of the present disclosure should have the common meanings understood by persons of ordinary skills in the field to which the present disclosure belongs. "First", "second" and similar words used in the embodiments of the present disclosure do not indicate any order, quantity or importance, but are only used to distinguish different components. Words such as "include" or "contain" mean that the element or object preceded by the word covers the element or object listed after the word and its equivalents, and does not exclude other elements or objects. Words such as "connecting" or "connected" are not limited to physical or mechanical connections, but may include electrical connections, whether direct or indirect. "Up", "down", "left", "right", etc. are only used to indicate relative position relationships. When the absolute position of the object being described changes, the relative position relationship may also change accordingly.

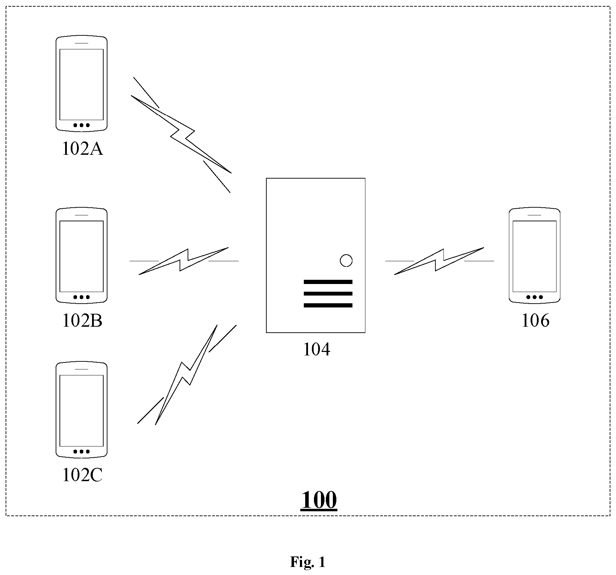

Fig. 1 shows a schematic diagram of an exemplary system 100 provided by an embodiment of the present disclosure.

As shown in Fig. 1, the system 100 may include at least one first terminal (e.g., first terminals 102A-102C), a server 104, and a second terminal 106. In some embodiments, the system 100 can be applied to a live streaming scenario. For example, the server 104 is configured to provide a live streaming service, where the first terminals 102A-102C may be terminals corresponding to users who watch the live streaming, and the second terminal 106 may be a terminal corresponding to a user who initiates the live streaming. In some embodiments, when the system 100 is applied to a multi-person interactive live streaming scenario, there may also be a plurality of second terminals 106.

The server 104 may be a single server or a plurality of servers. In a scenario with a plurality of servers, these servers may adopt a distributed architecture and may form a server cluster.

The first terminals 102A-102C and the second terminal 106 may be any terminal devices, which, for example, may be mobile terminals (e.g., mobile phones, pads) or fixed terminals (e.g., personal computers (PCs), laptop computers). The first terminals 102A-102C and the second terminal 106 can run an application, and the application can provide corresponding services to users, such as a live streaming service.

Embodiments of the present disclosure provide a method for sending a comment in a live streaming room, a method for receiving a comment in a live streaming room, and a related device, so that comments corresponding to multimedia data (such as videos) can be sent or received in the live streaming room, solving the problem that only text and emoticons can be sent in comments in the live streaming room, thereby improving the user experience.

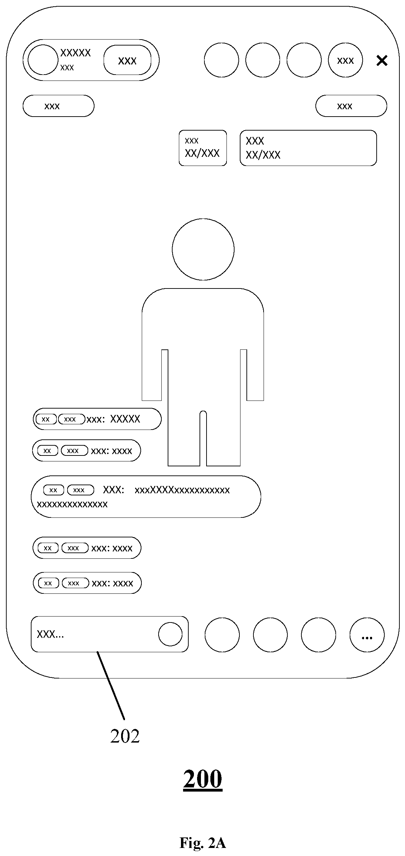

Fig. 2A shows a schematic diagram of an exemplary live streaming room page 200 according to an embodiment of the present disclosure.

As shown in Fig. 2A, after the second terminal 106 initiates a live streaming, the server 104 opens a live streaming room accordingly based on the initiation instruction. The live streaming room can be of different types, for example, it can be a music live streaming room, a dance live streaming room, a food live streaming room, a chat interactive live streaming room, etc. The server 104 can acquire, based on the instruction for the second terminal 106 to initiate a live streaming, the type of live streaming room that the second terminal 106 needs to open, thereby opening a live streaming room of the corresponding type. After the first terminals 102A-102C enter the live streaming room, the page 200 shown in Fig. 2A may be displayed accordingly.

In some embodiments, as shown in Fig. 2A, a third control 202 may be displayed on the live streaming room page 200. The third control 202 may be a control configured to input comments in the live streaming room, thereby prompting users that the comment function in the live streaming room can be triggered by clicking on the third control 202.

In some embodiments, in response to a trigger operation on the third control 202 on the live streaming room page, an information input window is displayed on the live streaming room page 200, and the first control is displayed in the information input window.

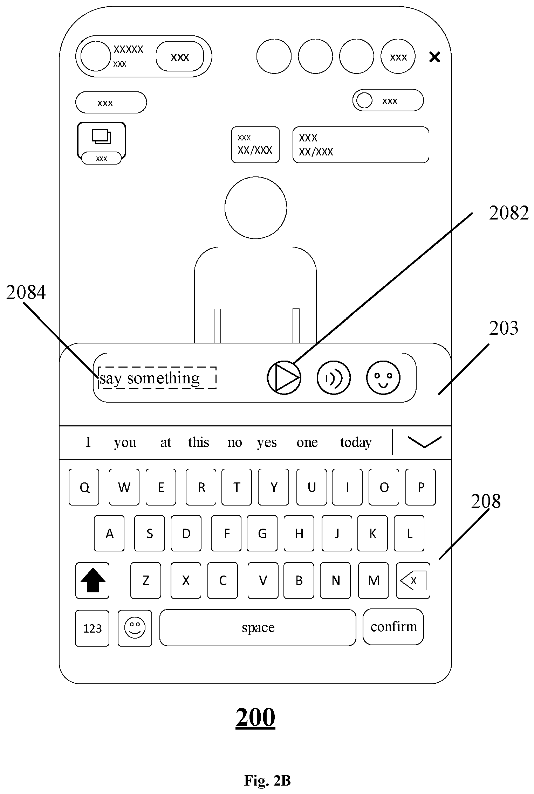

As shown in Figs. 2A and 2B, in response to the trigger operation on the third control 202, the first terminal 102A displays the information input window 2084 on the live streaming room page 200, and the first control 2082 is displayed in the information input window 2084 at the same time. As shown in Fig. 2B, the first control 2082 may include a video control configured to enable the sending of video comments in the live streaming room.

In some embodiments, in response to the trigger operation on the third control 202, the first terminal 102A will further determine the type of the current live streaming room. If the current live streaming room is of a preset live streaming room type, the first control 2082 will be displayed in the information input window 2084; if the current live streaming room is not of the preset live streaming room type, the first control 2082 will not be displayed in the information input window 2084.

The preset live streaming room type can be a live streaming room with social functions, that is, a live streaming room where users (such as live streaming anchors or anchors on the microphone) of the second terminal 106 and users (such as audiences) of the first terminal 102A can communicate.

In some embodiments, the preset live streaming room type may be a chat interactive live streaming room, or other live streaming rooms that can realize social functions, which will not be limited in this embodiment.

Assuming that a user of the first terminal 102A clicks on the third control 202, in response to the trigger operation on the third control 202, the first terminal 102A can display on the live streaming room page 200 the information input window 2084 configured to input comments in the live streaming room. Fig. 2B shows a schematic diagram of another exemplary live streaming room page 200 according to an embodiment of the present disclosure. As shown in Fig. 2B, when the third control 202 is triggered, a subpage 203 may pop up from the live streaming room page 200, and the information input window 2084 is displayed on the subpage 203. By triggering the information input window 2084, text, numbers and other comment contents can be input in the information input window 2084, thereby realizing the input of comment information in the live streaming room.

Optionally, the first control 2082 is displayed in the information input window 2084; or, the first control 2082 may also be displayed on one side of the information input window 2084, which is not displayed in this embodiment.

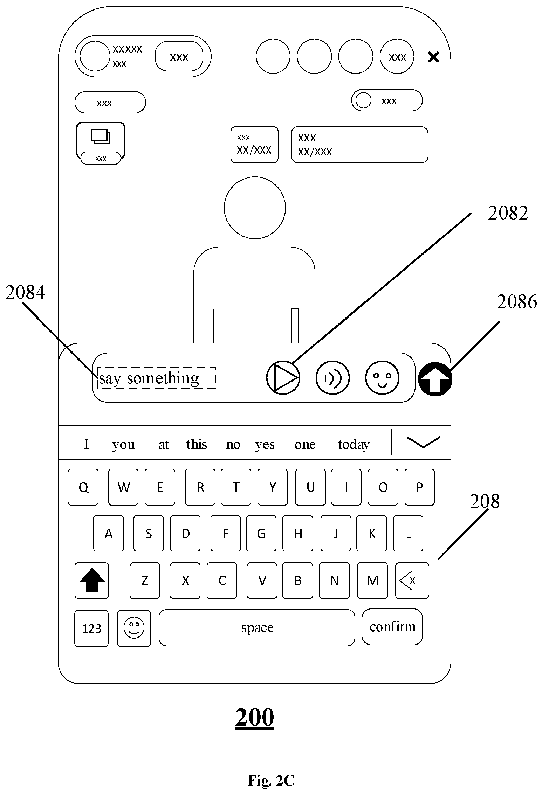

In some embodiments, assuming that a user of the first terminal 102A clicks on the third control 202, in response to the trigger operation on the third control 202, the first terminal 102A displays on the live streaming room page 200 the information input window 2084 configured to input comments in the live streaming room. As shown in Fig. 2C, a second control 2086 configured to send comment information is also displayed on the live streaming room page 200 at the same time. In this way, after inputting comment information through the information input window 2084, the user of the first terminal 102A can click on the second control 2086 which may include a sending control. In response to the trigger operation on the second control 2086, the first terminal 102A sends the comment information input in the information input window 2084 to a comment area on the live streaming room page 200.

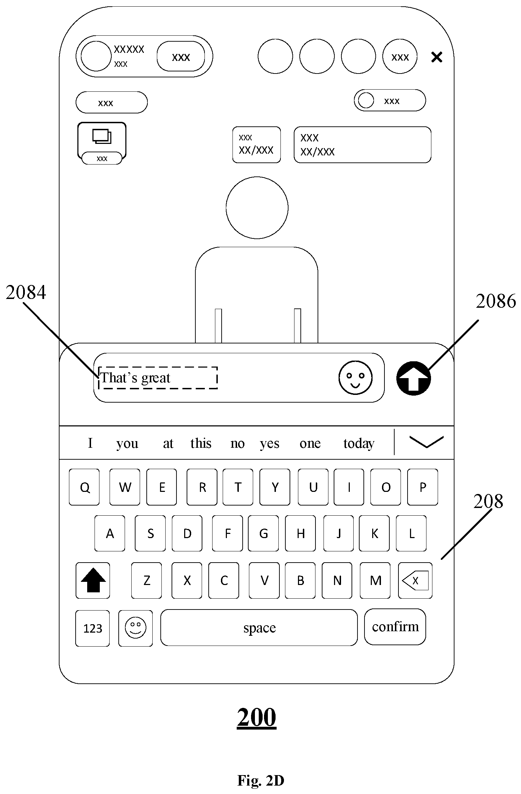

In some embodiments, as shown in Fig. 2B, the third control 202 may include a comment control, such as a comment input box. When, in response to the trigger operation on the third control 202, the first terminal 102A displays the information input window 2084 on the live streaming room page 200, the second control 2086 may not be displayed on the live streaming room page 200, and after the comment information is input in the information input window 2084, as shown in Fig. 2D, the second control 2086 is then displayed, which can reduce the controls displayed in the subpage 203, making the subpage 203 more concise and aesthetically pleasing without affecting the comment information input function.

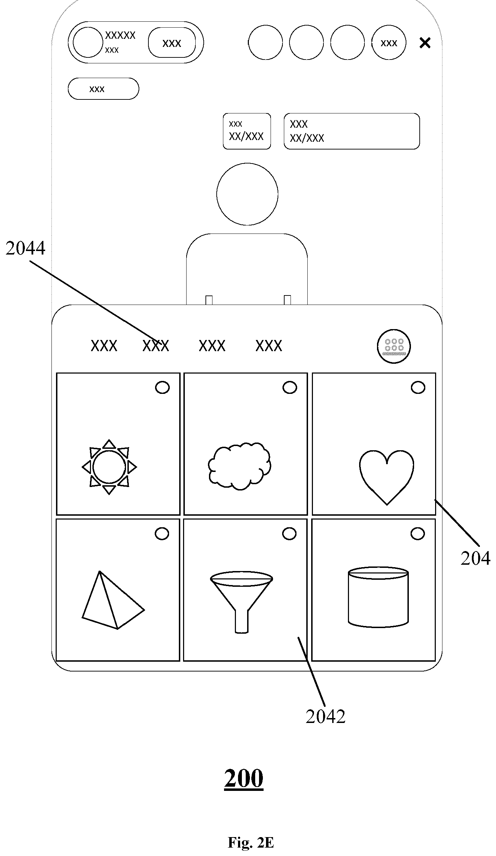

In some embodiments, as shown in Figs. 2B and 2E, when a trigger operation is performed on the first control 2082 on the live streaming room page 200, a first window 204 is displayed on the live streaming room page 200. The first window 204 includes an identifier 2042 of at least one candidate multimedia data, and the first window may be an aggregated display window for the identifier of the at least one candidate multimedia data, for users to select the identifier of any candidate multimedia data.

Assuming that a user of the first terminal 102A clicks on the first control 2082, in response to the trigger operation on the first control 2082, the first terminal 102A displays on the live streaming room page 200 the first window 204 configured to display identifiers of the candidate multimedia data, and the first window 204 includes the identifier 2042 of the at least one candidate multimedia data. The input of comments corresponding to the multimedia data in the live streaming room is realized by selecting the identifier 2042 of the candidate multimedia data in the first window 204.

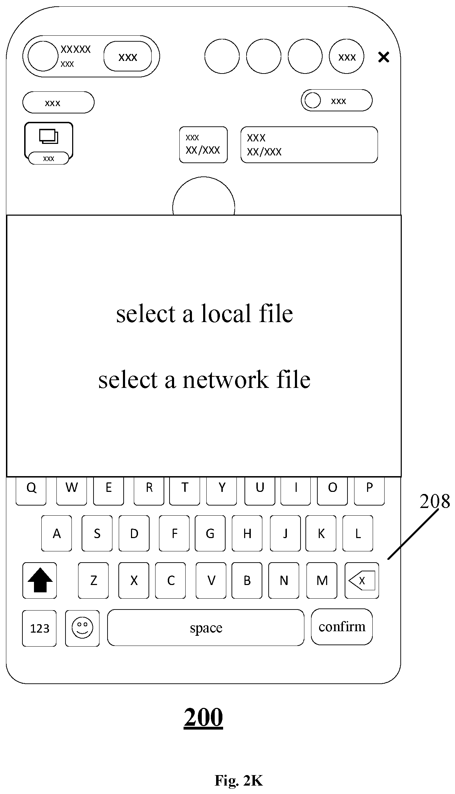

In some embodiments, when a user of the first terminal 102A clicks on the first control 2082, a selection window is displayed on the live streaming room page 200, the selection window providing a selection path for multimedia data. As shown in Fig. 2K, the selection window displays a control configured to select a local file and a control configured to select a network file. When the user of the first terminal 102A clicks on the control configured to select a local file, the path of the local file is displayed on the live streaming room page 200, so that the user of the first terminal 102A can select multimedia data stored locally in the first terminal 102A; when the user of the first terminal 102A clicks on the control configured to select a network file, the path of the network file is displayed on the live streaming room page 200, so that the user of the first terminal 102A can select multimedia data on the network side. The path of the network file may be the first window 204 configured to display the identifiers of the candidate multimedia data in this embodiment.

In some embodiments, as shown in Fig. 2B, when a user of the first terminal 102A clicks on the third control 202, in response to the trigger operation on the third control 202, the first terminal 102A also displays on the live streaming room page 200 an input method window 208 configured to input comment content. Through the input method window 208, text, numbers, punctuation marks and other information can be input in the information input window 2084.

In this embodiment, as shown in Fig. 2E, when a user of the first terminal 102A clicks on the first control 2082, in response to the trigger operation on the first control 2082, the first terminal 102A switches the input method window 208 in the subpage 203 to the first window 204. The first window 204 includes the identifier 2042 of the at least one candidate multimedia data. The input of comments corresponding to the multimedia data in the live streaming room is realized by selecting the identifier 2042 of the candidate multimedia data in the first window 204.

In some embodiments, as shown in Fig. 2E, the first window 204 includes at least one category tag 2044. When a trigger operation is performed on a target tag in the at least one category tag 2044, the identifier of the candidate multimedia data matching the target tag is displayed in the first window 204. In this embodiment, videos stored on the first terminal 102A or videos processed (such as creation, likes, favorites, historical viewing, etc.) by the first terminal 102A can be classified based on each category tag 2044, so that when a certain category tag 2044 is triggered, the identifier of the candidate multimedia data corresponding to the category tag 2044 is displayed.

In some embodiments, category tags 2044 may include likes, favorites, works, historical viewings, etc. The identifier of the candidate multimedia data corresponding to the category tag 2044 "Likes" can be a video marked as liked by a user when browsing videos through the first terminal 102A; the identifier of the candidate multimedia data corresponding to the category tag 2044 "Favorites" can be a video favorited by the user when browsing videos through the first terminal 102A; the identifier of the candidate multimedia data corresponding to the category tag 2044 "Create" can be a video created by the user through the first terminal 102A; the identifier of the candidate multimedia data corresponding to the category tag 2044 "Historical Viewing" can be a video browsed by the user through the first terminal 102A.

In this embodiment, when a user selects a target tag by clicking on the target tag through the first terminal 102A, the identifier of the candidate multimedia data matching the target tag is displayed in the first window 204. For example, when the user clicks on the category tag "Favorites" through the first terminal 102A, the identifier of candidate multimedia data of the video favorited by the user through the first terminal 102A is displayed in the first window 204.

In some embodiments, when a user selects the identifier of a certain piece of candidate multimedia data in the first window 204 through the first terminal 102A, in response to a selection operation on an identifier of first multimedia data among the identifiers of the at least one candidate multimedia data in the first window 204, the first terminal 102A determines, according to the selection operation, first multimedia data corresponding to the identifier of the first multimedia data.

The multimedia data may include multimedia data such as images, video files, and audio files. Accordingly, the identifiers of the candidate multimedia data can be image thumbnails corresponding to the images, preview videos corresponding to the video files, album cover images corresponding to the audio files, etc., which is not limited in this embodiment.

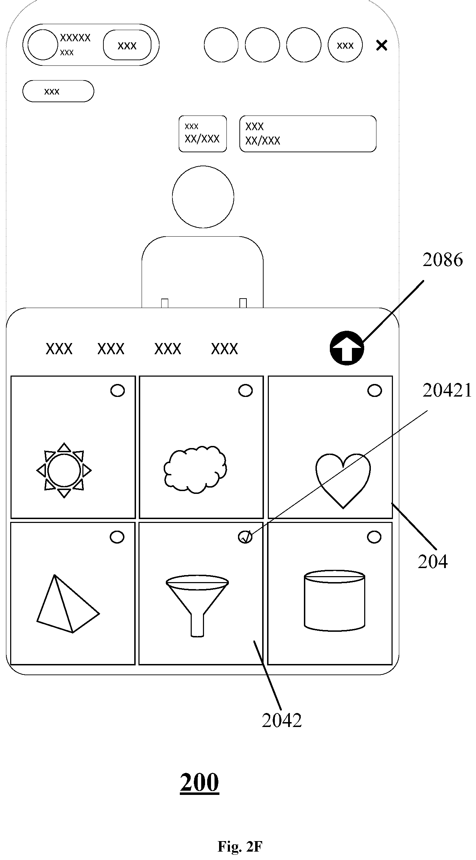

In this embodiment, a user clicks on the identifier of the first multimedia data in the first window 204 through the first terminal 102A, so as to select the identifier of the first multimedia data. After selected, the identifier of the first multimedia data presents a selected state. For example, as shown in Fig. 2F, a selection mark 20421 may be presented on the page of the identifier of the first multimedia data, so as to mark the selected identifier of the first multimedia data with a check mark; or, the identifier of the first multimedia data may be marked with a different grayscale, which is not limited in this embodiment. After the identifier of the first multimedia data is selected, first multimedia data corresponding to the identifier of the first multimedia data can be determined.

After the first multimedia data corresponding to the identifier of the first multimedia data is determined, the comment corresponding to the first multimedia data can be displayed on the live streaming room page 200 by triggering the second control 2086 on the live streaming room page 200. The comment provides an entry for playing the first multimedia data.

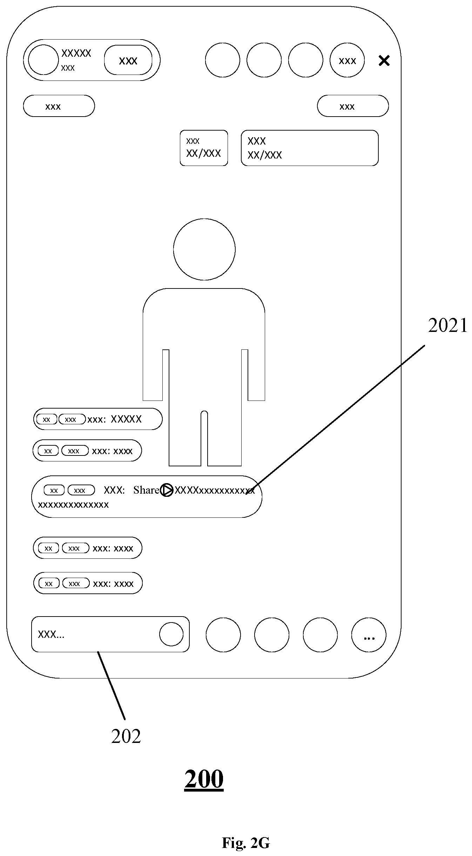

In this embodiment, as shown in Figs. 2F and 2G, assuming that the user clicks on the second control 2086 through the first terminal 102A after selecting the selected identifier of the first multimedia data, in response to the trigger operation on the second control 2086, the first terminal 102A displays a comment 2021 corresponding to the first multimedia data in a comment area of the live streaming room page 200. The comment 221 includes an entry for playing the first multimedia data, and users of the first terminals 102A-102C, the second terminal 106, etc. can view the first multimedia data through the comment 2021. Optionally, the format of the comment 2021 may be "[XXX (user)] shared: video text".

When in response to the trigger operation on the first control 2082, the first terminal 102A displays the first window 204 on the live streaming room page 200, the second control 2086 can be directly displayed on the live streaming room page 200. In this way, after the identifier of the first multimedia data is selected, the second control 2086 can be directly clicked to display the comment 2021 corresponding to the first multimedia data in the comment area of the live streaming room page 200.

Or, in response to the trigger operation on the first control 2082, the first terminal 102A may not display the second control 2086 on the live streaming room page 200, and after the identifier of the first multimedia data is selected, the second control 2086 is then displayed, which can reduce the controls displayed in the subpage 203, making the subpage 203 more concise and aesthetically pleasing without affecting the function of sending video comment information.

In some embodiments, the live streaming room page includes a first area, in which the comment 2021 corresponding to the first multimedia data is displayed. The first area also includes other comments of different types from that of the comment 2021 corresponding to the first multimedia data. In this embodiment, the comment 2021 corresponding to the first multimedia data is highlighted in the first area. For example, the comment 2021 corresponding to the first multimedia data can be highlighted by using a mark different from those of the other comments.

The first area may be a comment area of the live streaming room. This comment area includes not only the comment 2021 corresponding to the first multimedia data, but also other comments of different types from that of the comment 2021 corresponding to the first multimedia data, such as ordinary text comments, emoticon comments, users sending gifts, and users entering the live streaming room. In order to distinguish the comment 2021 corresponding to the first multimedia data from other comments, the comment 2021 corresponding to the first multimedia data is highlighted with a mark different from those of other comments.

For example, in order to distinguish the comment 2021 corresponding to the first multimedia data from other common text comments, the comment 2021 corresponding to the first multimedia data is marked with at least one of a preset color, font, and icon. For example, the comment 2021 corresponding to the first multimedia data is marked in blue, and the other comments are marked in white; for example, the comment 2021 corresponding to the first multimedia data is marked in Song typeface, and the other comments are marked in regular script; for example, the comment 2021 corresponding to the first multimedia data is marked in size 4 font, and the other comments are marked in size 5 font; for example, the comment 2021 corresponding to the first multimedia data is marked in a video, etc., which is not limited in this embodiment.

In some embodiments, since the comment 2021 provides an entry for playing the first multimedia data, a second window is displayed on the live streaming room page 200 when a trigger operation is performed on the comment 2021 corresponding to the first multimedia data, so as to play the first multimedia data, where the second window completely or partially covers the live streaming room page.

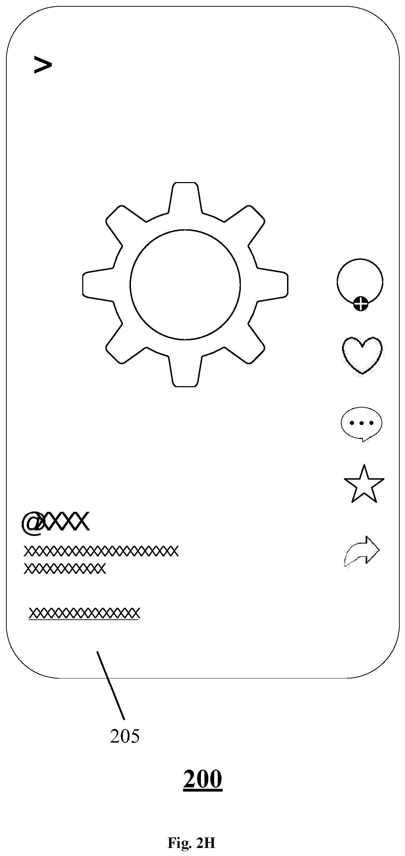

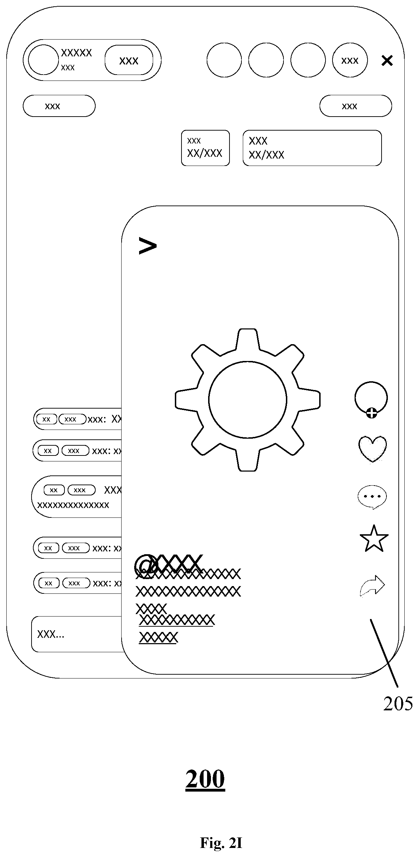

As shown in Figs. 2G, 2H, and 2I, assuming that any user of the first terminals 102A-102C clicks on the comment 2021, in response to a trigger operation on the comment 2021, the first terminal 102A displays a second window 205 on the live streaming room page 200. The second window 205 is configured to play the first multimedia data corresponding to the comment 2021. As shown in Fig. 2H, the second window 205 may completely cover the live streaming room page 200; or, as shown in Fig. 2I, the second window 205 may partially cover the live streaming room page 200. When the second window 205 partially covers the live streaming room page 200, the size of the second window 205 and the position thereof on the live streaming room page 200 can be adaptively adjusted.

In some embodiments, the second window 205 may include controls configured to implement operations such as likes, comments, and forwarding. When the users of the first terminals 102A-102C perform a trigger operation on the controls configured to implement operations such as likes, comments, and forwarding, the first terminals 102A-102C can perform, in response to the trigger operation, operations such as likes, comments, and forwarding on the first multimedia data played in the second window 205.

Optionally, the second window 205 may not contain a video search bar and a control configured to forward comments at the bottom of a video, or may include a video search bar and a control configured to forward comments at the bottom of a video, which is not limited in this embodiment.

Optionally, in the second window 205, an avatar/nickname/music details page link of the first multimedia data is closed, so that a relevant page will not be jumped to when a trigger operation is performed on the avatar/nickname/music details page link, and a prompt message "Cannot be viewed in the live streaming room at the moment" is displayed on the live streaming room page 200.

Optionally, a control configured to roll back is displayed in the second window 205. When a trigger operation is performed on the control configured to roll back, users can return to the live streaming room page 200.

In some embodiments, when the second window 205 completely covers the live streaming room page 200, in response to a sliding operation on the second window 205, the first multimedia data is switched to second multimedia data and played, where the second multimedia data is multimedia data adjacent to the first multimedia data in a playlist, the playlist includes a list of multimedia data carried by comments in the live streaming room, and the multimedia data in the playlist are sorted by comment time.

In this embodiment, when the first terminals 102A-102C send a plurality of comments corresponding to multimedia data, a playlist is generated based on the multimedia data carried by each comment in the live streaming room. When a user slides the second window 205 through the first terminal 102A, in response to the sliding operation on the second window 205, the first terminal 102A switches the first multimedia data being played to the second multimedia data adjacent to the first multimedia data in the playlist, and plays the second multimedia data.

When the user slides the second window 205 from bottom to top through the first terminal 102A, the second multimedia data is the previous video of the first multimedia data; when the user slides the second window 205 from top to bottom through the first terminal 102A, the second multimedia data is the next video of the first multimedia data. Or, other forms of sliding operations can be performed on the second window 205 through the first terminal 102A, which is not limited in this embodiment.

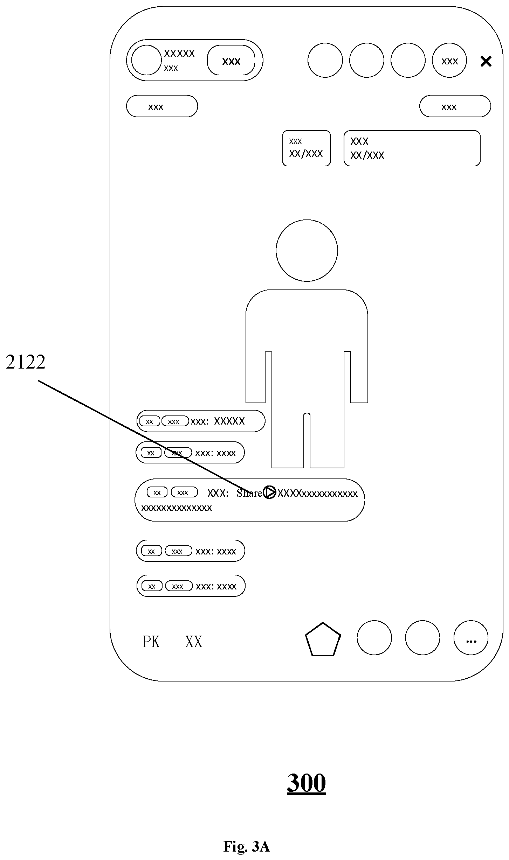

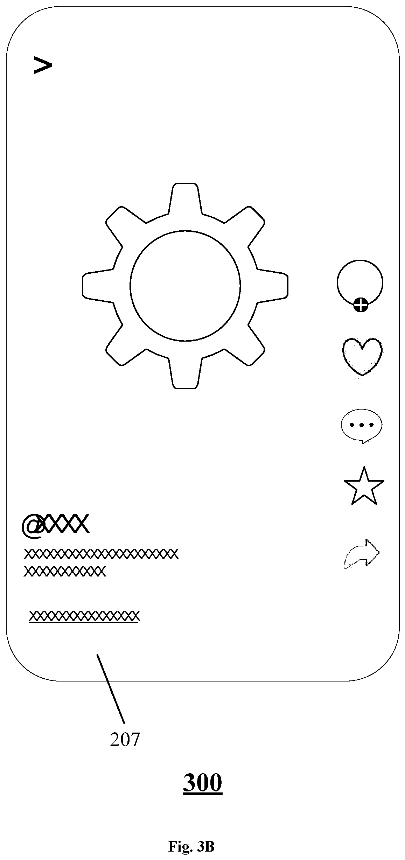

In some embodiments, when the comment 2021 corresponding to the first multimedia data is displayed on the live streaming room page 200, as shown in Fig. 3A, a comment 2122 corresponding to the comment 2021 may also be displayed on a live streaming room page 300 of the second terminal 106. Furthermore, when a trigger operation is performed on the comment 2122 corresponding to the first multimedia data, as shown in Fig. 3B, a third window 207 is displayed on the live streaming room page 300 of the second terminal 106, and the first multimedia data is played in the third window 207. The third window may be a playback window, which may be displayed full-screen or partially full-screen, the same as or similar to the second window. The third window 207 may completely cover the live streaming room page 300; or, the third window 207 may also partially cover the live streaming room page 300. When the third window 207 partially covers the live streaming room page 300, the size of the third window 207 and the position thereof on the live streaming room page 300 can be adaptively adjusted.

In some embodiments, as shown in Fig. 3B, the third window 207 may also include controls configured to implement operations such as likes, comments, and forwarding. When a user of the second terminal 106 performs a trigger operation on the controls configured to implement operations such as likes, comments, and forwarding, the second terminal 106 can perform, in response to the trigger operation, operations such as likes, comments, and forwarding on the first multimedia data played in the third window 207.

Optionally, the third window 207 may not contain a video search bar and a control configured to forward comments at the bottom of a video, or may include a video search bar and a control configured to forward comments at the bottom of a video, which is not limited in this embodiment.

Optionally, in the third window 207, an avatar/nickname/music details page link of the first multimedia data is closed, so that a relevant page will not be jumped to when a trigger operation is performed on the avatar/nickname/music details page link, and a prompt message "Cannot be viewed in the live streaming room at the moment" is displayed on the live streaming room page 300.

Optionally, a control configured to roll back is displayed in the third window 207. When a trigger operation is performed on the control configured to roll back, users can return to the live streaming room page 300.

In some embodiments, when the third window 207 completely covers the live streaming room page 300, in response to a sliding operation on the third window 207, the first multimedia data is switched to second multimedia data and played, where the second multimedia data is multimedia data adjacent to the first multimedia data in a playlist, the playlist includes a list of multimedia data carried by comments in the live streaming room, and the multimedia data in the playlist are sorted by comment time.

In this embodiment, when the first terminals 102A-102C send a plurality of comments corresponding to videos, a playlist is generated based on the videos carried by each comment in the live streaming room. When a user slides the third window 207 through the second terminal 106, in response to the sliding operation on the third window 207, the second terminal 106 switches the first multimedia data being played to the second multimedia data adjacent to the first multimedia data in the playlist, and plays the second multimedia data.

When the user slides the third window 207 from bottom to top through the second terminal 106, the second multimedia data is the previous video of the first multimedia data; when the user slides the third window 207 from top to bottom through the third window 207, the second multimedia data is the next video of the first multimedia data. Or, other forms of sliding operations can be performed on the third window 207 through the third window 207, which is not limited in this embodiment.

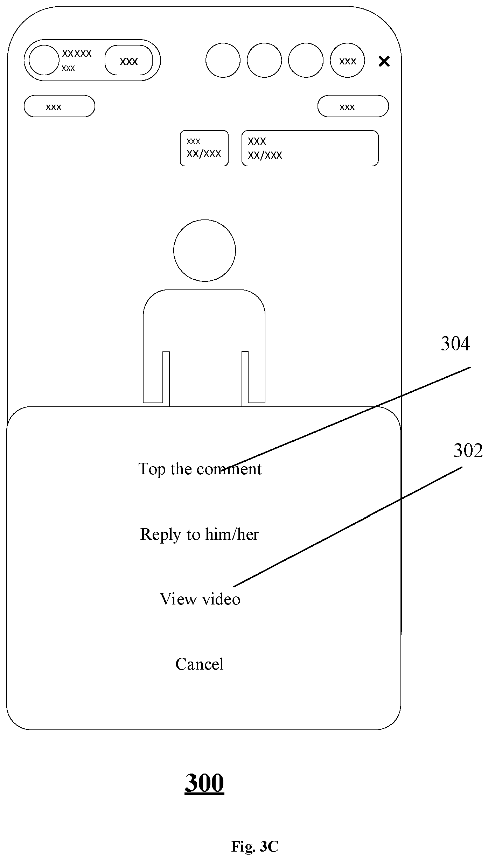

In some embodiments, as shown in Fig. 3C, when a trigger operation is performed on the comment 2122 corresponding to the first multimedia data, a management window is first displayed on the live streaming room page 300 of the second terminal 106. The management window includes a plurality of controls configured to perform different processing on comments. The plurality of controls include a fifth control 302, which includes an entry for playing the first multimedia data. When a trigger operation is performed on the fifth control 302, the third window 207 is displayed on the live streaming room page 300.

In this embodiment, the fifth control 302 includes the entry for playing the first multimedia data, which entry can display a prompt message "View video". When a user of the second terminal 106 clicks on the comment 2122 corresponding to the first multimedia data, in response to the trigger operation on the comment 2122 corresponding to the first multimedia data, the second terminal 106 displays the fifth control 302 on the live streaming room page 300; when the user of the second terminal 106 clicks on the fifth control 302, in response to the trigger operation on the fifth control 302, the second terminal 106 displays the third window 207 on the live streaming room page 300, and plays the first multimedia data through the third window 207.

Optionally, other methods can be used to trigger the comment 2122 corresponding to the first multimedia data, such as long pressing or double-clicking on the comment 2122 corresponding to the first multimedia data, and the third window 207 is directly displayed on the live streaming room page 300, which is not limited in this embodiment.

In some embodiments, the live streaming room page 300 includes a first area and a second area, and the comment 2122 corresponding to the first multimedia data is displayed in the first area. The first area may be a comment area of the live streaming room page 300, and the second area may be set above the first area for displaying the comments selected by the anchor to be topped.

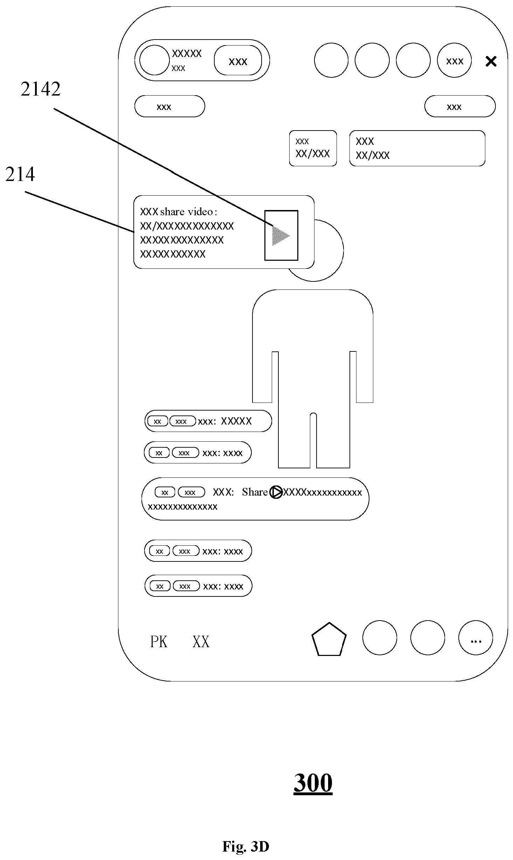

As shown in Fig. 3C, the plurality of controls in the management window also include a sixth control 304, which may include a comment topping control. When a trigger operation is performed on the sixth control 304, as shown in Fig. 3D, a seventh control 214 is displayed in the second area of the live streaming room page 300, so that the comment 2122 corresponding to the first multimedia data is topped. The seventh control 214 includes a comment 2142 of the first multimedia data, and the comment corresponding to the first multimedia data includes an entry for playing the first multimedia data.

In this embodiment, the sixth control 304 can display a prompt message "Comment is topped". When a user of the second terminal 106 clicks on the comment 2122 corresponding to the first multimedia data, in response to the trigger operation on the comment 2122 corresponding to the first multimedia data, the second terminal 106 displays the sixth control 304 in the management window; when the user of the second terminal 106 clicks on the sixth control 304, in response to the trigger operation on the sixth control 304, the second terminal 106 displays the seventh control 214 in the second area of the live streaming room page 300. The seventh control 214 includes the comment 2142 of the first multimedia data, and the comment of the first multimedia data includes the entry for playing the first multimedia data, so that the comment 2022 corresponding to the first multimedia data is topped.

Optionally, other methods may also be used to top the comment 2122 corresponding to the first multimedia data, such as double-clicking on or long pressing the comment corresponding to the first multimedia data, which is not limited in this embodiment.

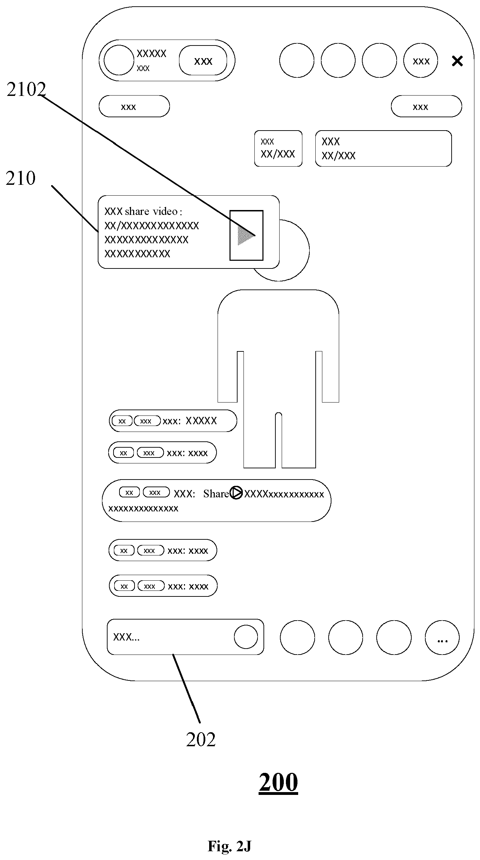

In some embodiments, when the seventh control 214 is displayed on the live streaming room page 300 of the second terminal 106, that is, when the comment corresponding to the first multimedia data or the comment corresponding to the third multimedia data is topped by the user, that is, the anchor of the second terminal 106, the fourth control corresponding to the seventh control 214 is also displayed in the second area of the live streaming room page 200 of the first terminal 102A. As shown in Fig. 2J, the fourth control 210 includes the comment corresponding to the first multimedia data or the comment corresponding to the third multimedia data. When the fourth control 210 includes the comment corresponding to the first multimedia data, the comment corresponding to the first multimedia data includes an entry for playing the first multimedia data; when the fourth control 210 includes the comment corresponding to the third multimedia data, the comment corresponding to the third multimedia data includes an entry for playing the third multimedia data. As an optional embodiment, the fourth control/seventh control may include a display control, which is configured to display a comment that is topped. The fourth control/seventh control may be of a card display style (as shown in Fig. 2J). Optionally, a card can display at least one of a video cover, a video playback control, and a video introduction comment sender ID (used to mark who the video comment is from). In some embodiments, the card may also include a player area. By clicking on the card, a video can also be played directly in the player area of the card, so that the video can be watched without jumping to another page or opening a new window. It is understandable that the seventh control 214 may also have the same or similar functionality and style of the fourth control 210, which will not be repeated here.

The first area of the live streaming room page 200 of the first terminal 102A includes the comment corresponding to the first multimedia data and the comment corresponding to the third multimedia data. The comment corresponding to the first multimedia data may be sent through the first terminal 102A of the current user, and the comment corresponding to the third multimedia data is from a sending end different from that for the comment corresponding to the first multimedia data. For example, the comment corresponding to the third multimedia data may be sent through the first terminals 102B-102C of other users. That is, in this embodiment, an anchor user of the second terminal 106 can top the comments corresponding to the multimedia data from audience users of different first terminals 102A-102C. The user of the current first terminal 102A can not only see the comments corresponding to the multimedia data that are topped on this terminal, but also see the comments corresponding to the multimedia data that are topped on other audience terminals, and can view the specific content of the corresponding multimedia data thereof based on the comments corresponding to the multimedia data that are topped.

In this embodiment, when users of the first terminals 102A-102C trigger the fourth control 210, the second window 205, which may be a playback window, is displayed on the live streaming room page 200 of the first terminals 102A-102C, so as to play the first multimedia data or the third multimedia data. The second window 205 completely or partially covers the live streaming room page 200. The second window may be displayed full-screen or partially full-screen.

In this embodiment, when users of the first terminals 102A-102C click on the entry 2102 for the first multimedia data, the second window 205 is displayed on the live streaming room page 200, and the first multimedia data or the third multimedia data is played through the second window 205. That is, in this embodiment, the user of the current first terminal 102A can not only see the comments corresponding to the multimedia data that are topped on this terminal, but also see the comments corresponding to the multimedia data that are topped on other audience terminals, and can view the specific content of the corresponding multimedia data thereof based on the comments corresponding to the multimedia data that are topped.

Optionally, in the above embodiment, the audio information corresponding to the live streaming room and the audio information corresponding to the second window 205 can be played simultaneously. The audio information corresponding to the live streaming room may include corresponding audio of the anchor during the live streaming, such as the anchor's speaking voice, and music sound in the live streaming room; the audio information corresponding to the second window 205 is the audio of the multimedia data played in the second window 205, such as the audio information of the first multimedia data or the third multimedia data played in the second window 205. In this way, the users of the first terminals 102A-102C can hear the sound of the live streaming room as well as the sound of the first multimedia data or the sound of the third multimedia data played in the second window 205.

Or, if necessary, a user can also choose to stop playing the audio information of the second window 205 when playing the audio information of the live streaming room page 200, so that the users of the first terminals 102A-102C cannot hear the sound of the first multimedia data or the third multimedia data in the second window 205, but can only hear the sound of the live streaming room page 200.

Or, if necessary, a user can choose to stop playing the audio information of the live streaming room page 200 and only play the audio information of the second window 205, so that the users of the first terminals 102A-102C can only hear the sound of the first multimedia data or the third multimedia data in the second window 205, but cannot hear the sound of the live streaming room page 200, which is not limited in this embodiment.

Optionally, in the above embodiment, permission whether to allow video comments can be set by the second terminal 106. When a user, such as the anchor, of the second terminal 106 chooses to allow the users of the first terminals 102A-102C to send comments corresponding to the multimedia data, the first control is displayed on the live streaming room page of the sending end of the comments; if the user, such as the anchor, of the second terminal 106 performs a hidden setting operation on the function, that is, the anchor does not allow the users of the first terminals 102A-102C to send comments corresponding to the multimedia data, the first control is hidden on the live streaming room page 200 of the sending end of the comments.

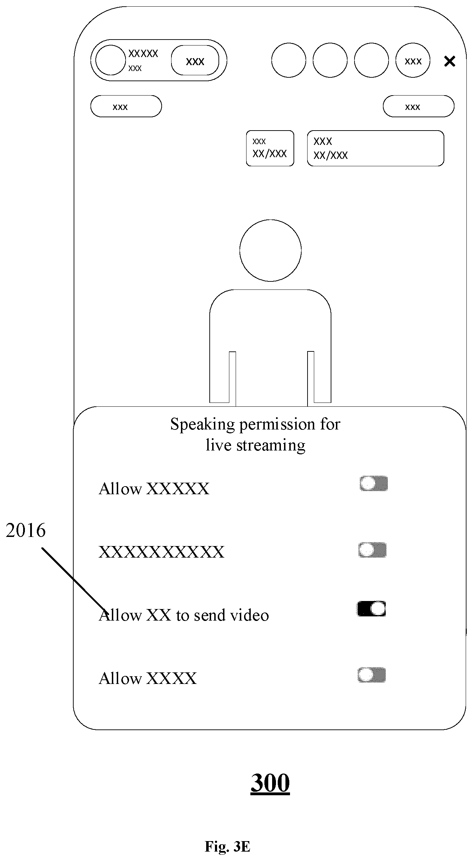

As shown in Fig. 3E, when a permission control window is entered on the live streaming room page 300 of the second terminal 106, an eighth control 2016 can be displayed on the live streaming room page 300 of the second terminal 106. When a user of the second terminal 106 performs a selection operation based on the eighth control 2016 on the live streaming room page 300, the first control 2082 is displayed at sending ends of the comments, i.e., the first terminals 102A-102C, so that the users of the first terminals 102A-102C can send video comments in the live streaming room; when the user of the second terminal 106 performs a hidden setting operation based on the eighth control 2016 on the live streaming room page 300, the first control 2082 is hidden at the sending ends of the comments, i.e., the first terminals 102A-102C, so that the users of the first terminals 102A-102C cannot send video comments in the live streaming room.

The video sending ends, i.e., the first terminals 102A-102C hide the first control 2082, that is, the first control 2082 is not displayed on the live streaming room page 200 of the first terminals 102A-102C, or the first control 2082 is set to an unusable mode on the live streaming room page 200 of the first terminals 102A-102C, which is not limited in this embodiment.

In some embodiments, when the second terminal 106 receives the comment corresponding to the first multimedia data, a prompt message corresponding to the first multimedia data is displayed in the first area of the live streaming room page 300 of the second terminal 106. For example, a prompt message "New video comments, long press to support wall display; permission for users to send videos can be turned off from live streaming settings" can be displayed in the comment area of the live streaming room page 300 when the comment corresponding to the first multimedia data appears for the Nth time (for example, the first time) on the live streaming room page 300 of the second terminal 106, so as to remind the second terminal 106 to set the permission whether to allow users to send video comments. Or, other prompt messages may also be displayed, which is not limited in this embodiment.

It can be seen from the above embodiment that the system 100 provided by an embodiment of the present disclosure realizes the sending of video comments in a live streaming room, enriching the interactive mode of comments in the live streaming room.

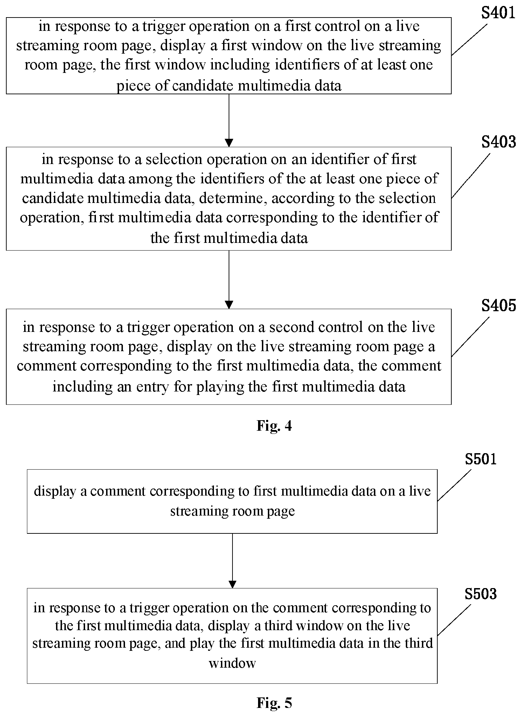

An embodiment of the present disclosure also provides a method for sending a comment in a live streaming room. Fig. 4 shows a flowchart of a method for sending a comment in a live streaming room provided by an embodiment of the present disclosure. As shown in Fig. 4, the method may be applied to the first terminals 102A-102C in Fig. 1, and may further include the following steps.

Step S401, in response to a trigger operation on a first control on a live streaming room page, display a first window on the live streaming room page, the first window including identifiers of at least one piece of candidate multimedia data.

Step S403, in response to a selection operation on an identifier of first multimedia data among the identifiers of the at least one piece of candidate multimedia data, determine, according to the selection operation, first multimedia data corresponding to the identifier of the first multimedia data.

Step S405, in response to a trigger operation on a second control on the live streaming room page, display on the live streaming room page a comment corresponding to the first multimedia data, the comment including an entry for playing the first multimedia data.

In the method for commenting in a live streaming room provided by an embodiment of the present disclosure compared with the related comments in the live streaming room being merely in a comment mode of text and emoticon comments, a user of a first terminal can send comments corresponding to videos in the comments in the live streaming room, and the comments include playback entries of the videos, such that users of other terminals can share the video comments in the comments in the live streaming room, and other users can also view the specific content of the video comments, thereby improving the interaction efficiency and enhancing the product interaction performance.

In some embodiments, before responding to a trigger operation on a first control on a live streaming room page, the method also includes: in response to a trigger operation on a third control on the live streaming room page, displaying an information input window on the live streaming room page, and displaying the first control in the information input window.

In some embodiments, before responding to a trigger operation on a first control on a live streaming room page, the method also includes:
in response to the trigger operation on the third control, displaying an input method window of the third control on the live streaming room page.

The in response to a trigger operation on a first control on a live streaming room page, displaying a first window on the live streaming room page includes: in response to the trigger operation on the first control, switching the input method window to the first window.

In some embodiments, the first window includes at least one category tag; and the displaying a first window on the live streaming room page includes: in response to a trigger operation on a target tag in the at least one category tag, displaying in the first window an identifier of the candidate multimedia data matching the target tag.

In some embodiments, after determining, according to the selection operation, first multimedia data corresponding to the identifier of the first multimedia data, the method also includes: displaying the second control in the first window.

In some embodiments, after displaying on the live streaming room page a comment corresponding to the first multimedia data, the method also includes:
in response to a trigger operation on the comment corresponding to the first multimedia data, displaying a second window to play the first multimedia data, where the second window completely or partially covers the live streaming room page.

In some embodiments, the method also includes: in response to a sliding operation on the second window, switching the first multimedia data to second multimedia data and playing the second multimedia data, where the second multimedia data is multimedia data adjacent to the first multimedia data in a playlist, the playlist includes a list of multimedia data carried by comments in the live streaming room, and the multimedia data in the playlist are sorted by comment time.

In some embodiments, the live streaming room page includes a first area and a second area. The first area includes the comment corresponding to the first multimedia data and a comment corresponding to third multimedia data, and the comment corresponding to the third multimedia data is from a different sending end than the comment corresponding to the first multimedia data.

The method also includes:
in response to the comment corresponding to the first multimedia data or the comment corresponding to the third multimedia data being topped by an anchor, displaying a fourth control in the second area, the fourth control including the comment corresponding to the first multimedia data or the comment corresponding to the third multimedia data, where the comment corresponding to the first multimedia data includes an entry for playing the first multimedia data, or the comment corresponding to the third multimedia data includes an entry for playing the third multimedia data.

In some embodiments, the first area is configured to display comments in the live streaming room; the method also includes: highlighting the comment corresponding to the first multimedia data in the first area.

In some embodiments, the method also includes: in response to a trigger operation on the fourth control, displaying the second window on the live streaming room page, so as to play the first multimedia data or the third multimedia data, where the second window completely or partially covers the live streaming room page.

In some embodiments, the method also includes: playing audio information corresponding to the live streaming room and audio information corresponding to the second window simultaneously.

It should be noted that the method provided by an embodiment of the present disclosure may be executed by a single device, such as a computer or a server. The method of this embodiment of the present disclosure may also be applied in a distributed scenario and completed by a plurality of devices cooperating with each other. In the case of such a distributed scenario, one of the plurality of devices may only execute one or more steps in the method of the embodiment of the present disclosure, and the plurality of devices will interact with each other to complete the method.

It should be noted that the above describes some embodiments of the present disclosure. Other embodiments are within the scope of the appended claims. In some cases, the actions or steps recited in the claims may be performed in an order different from that in the above embodiments and still achieve desirable results. In addition, the processes depicted in the accompanying drawings do not necessarily require the particular order shown or sequential order to achieve desirable results. In certain implementations, multitasking and parallel processing are also possible or may be advantageous.

An embodiment of the present disclosure also provides a method for receiving a comment in a live streaming room. Fig. 5 shows a flowchart of a method for receiving a comment in a live streaming room provided by an embodiment of the present disclosure. As shown in Fig. 5, the method may be applied to the second terminal 106 in Fig. 1, and may further include the following steps.

Step S501, display a comment corresponding to first multimedia data on a live streaming room page.

Step S503, in response to a trigger operation on the comment corresponding to the first multimedia data, display a third window on the live streaming room page, and play the first multimedia data in the third window, where the video playback page completely or partially covers the live streaming room page.

In the method for commenting in a live streaming room provided by an embodiment of the present disclosure compared with the related comments in the live streaming room being merely in a comment mode of text and emoticon comments, a user of a second terminal can view comments corresponding to videos in the live streaming room, and the comments include playback entries of the videos, such that the user of the second terminal can view the specific content of the video comments, thereby improving the interaction efficiency and enhancing the product interaction performance.

In some embodiments, the in response to a trigger operation on the comment corresponding to the first multimedia data, displaying a third window on the live streaming room page, and playing the first multimedia data in the third window includes:

in response to the trigger operation on the comment corresponding to the first multimedia data, displaying a management window on the live streaming room page, the management window including a plurality of controls configured to perform different processing on comments, and the plurality of controls including a fifth control which includes an entry for playing the first multimedia data; and
in response to a trigger operation on the fifth control, displaying the third window, and playing the first multimedia data in the third window.

In some embodiments, the live streaming room page includes a first area and a second area. The comment corresponding to the first multimedia data is displayed in the first area, and the plurality of controls in the management window also include a sixth control. After displaying the management window on the live streaming room page, the method also includes:
in response to a trigger operation on the sixth control, displaying a seventh control in the second area, the seventh control including the comment corresponding to the first multimedia data, and the comment corresponding to the first multimedia data including the entry for playing the first multimedia data.

In some embodiments, the first area is configured to display comments in the live streaming room. The method also includes: highlighting the comment corresponding to the first multimedia data in the first area.

In some embodiments, the method also includes: in response to receiving the comment corresponding to the first multimedia data, displaying a prompt message corresponding to the first multimedia data in the first area.

In some embodiments, the method also includes: in response to a hidden setting operation of the anchor, hiding the first control on the live streaming room page of the sending end for comments.

It should be noted that the method provided by an embodiment of the present disclosure may be executed by a single device, such as a computer or a server. The method of this embodiment may also be applied in a distributed scenario and completed by a plurality of devices cooperating with each other. In the case of such a distributed scenario, one of the plurality of devices may only execute one or more steps in the method of the embodiment of the present disclosure, and the plurality of devices will interact with each other to complete the method.

It should be noted that the above describes some embodiments of the present disclosure. Other embodiments are within the scope of the appended claims. In some cases, the actions or steps recited in the claims may be performed in an order different from that in the above embodiments and still achieve desirable results. In addition, the processes depicted in the accompanying drawings do not necessarily require the particular order shown or sequential order to achieve desirable results. In certain implementations, multitasking and parallel processing are also possible or may be advantageous.

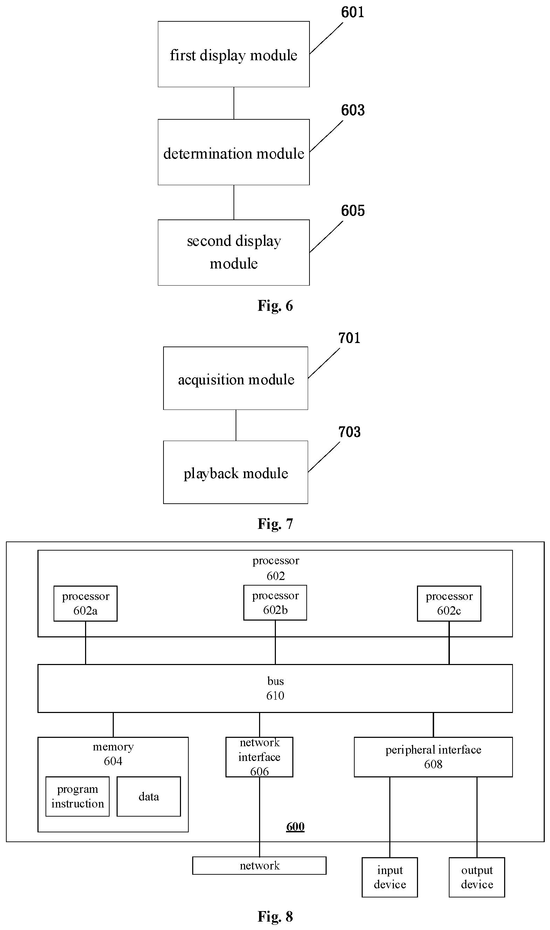

An embodiment of the present disclosure also provides an apparatus for sending a comment in a live streaming room. Fig. 6 shows a structural block diagram of an apparatus for sending a comment in a live streaming room provided by an embodiment of the present disclosure. As shown in Fig. 6, the apparatus includes:

A first display module 601, configured to: in response to a trigger operation on a first control on a live streaming room page, display a first window on the live streaming room page, the first window including identifiers of at least one piece of candidate multimedia data.

A determination module 603, configured to: in response to a selection operation on an identifier of first multimedia data among the identifiers of the at least one piece of candidate multimedia data, determine, according to the selection operation, first multimedia data corresponding to the identifier of the first multimedia data.

A second display module 605, configured to: in response to a trigger operation on a second control on the live streaming room page, display on the live streaming room page a comment corresponding to the first multimedia data, the comment including an entry for playing the first multimedia data.

In some embodiments, the first display module 601 is also configured to: in response to a trigger operation on a third control on the live streaming room page, display an information input window on the live streaming room page, and display the first control in the information input window.

In some embodiments, the first display module 601 is also configured to: in response to the trigger operation on the third control, display an input method window of the third control on the live streaming room page.

The first display module 601 is also configured to: in response to the trigger operation on the first control, switch the input method window to the first window.

In some embodiments, the first window includes at least one category tag. The first display module 601 is also configured to: in response to a trigger operation on a target tag in the at least one category tag, display in the first window an identifier of the candidate multimedia data matching the target tag.

In some embodiments, the determination module 603 is also configured to: display the second control in the first window.

In some embodiments, the apparatus is also configured to: in response to a trigger operation on the comment corresponding to the first multimedia data, display a second window to play the first multimedia data, where the second window completely or partially covers the live streaming room page.

In some embodiments, the apparatus is also configured to: in response to a sliding operation on the second window, switch the first multimedia data to second multimedia data and play the second multimedia data, where the second multimedia data is a video adjacent to the first multimedia data in a playlist, the playlist includes a list of videos carried by comments in the live streaming room, and the videos in the playlist are sorted by comment time.

In some embodiments, the live streaming room page includes a first area and a second area, and the comment corresponding to the first multimedia data is displayed in the first area. The first area includes the comment corresponding to the first multimedia data and a comment corresponding to third multimedia data, and the comment corresponding to the third multimedia data is from a different sending end than the comment corresponding to the first multimedia data.

The apparatus is also configured to: in response to the comment corresponding to the first multimedia data or the comment corresponding to the third multimedia data being topped by an anchor, display a fourth control in the second area, the fourth control including the comment corresponding to the first multimedia data or the comment corresponding to the third multimedia data, where the comment corresponding to the first multimedia data includes an entry for playing the first multimedia data, or the comment corresponding to the third multimedia data includes an entry for playing the third multimedia data.

In some embodiments, the first area is configured to display comments in the live streaming room. The apparatus is also configured to: highlight the comment corresponding to the first multimedia data in the first area.

In some embodiments, the apparatus is also configured to: in response to a trigger operation on the fourth control, display the second window on the live streaming room page, so as to play the first multimedia data or the third multimedia data, where the second window completely or partially covers the live streaming room page.

In some embodiments, the apparatus is also configured to: play audio information corresponding to the live streaming room and audio information corresponding to the second window simultaneously.

For ease of description, the above apparatus is described in various modules according to their functions. Certainly, when implementing the present disclosure, the functions of each module can be implemented in the same or a plurality of software and/or hardware.

The apparatus of the above embodiment is configured to implement the corresponding method for sending a comment in a live streaming room in any of the above embodiments, and has the beneficial effects of the corresponding method embodiments, which will not be repeated here.

An embodiment of the present disclosure also provides an apparatus for receiving a comment in a live streaming room. Fig. 7 shows a structural block diagram of an apparatus for receiving a comment in a live streaming room provided by an embodiment of the present disclosure. As shown in Fig. 7, the apparatus includes:
An acquisition module 701, configured to: display a comment corresponding to first multimedia data on a live streaming room page.

A playback module 703, configured to: in response to a trigger operation on the comment corresponding to the first multimedia data, display a third window on the live streaming room page, and play the first multimedia data in the third window.

The video playback page completely or partially covers the live streaming room page.

In some embodiments, the playback module 703 is also configured to: in response to the trigger operation on the comment corresponding to the first multimedia data, display a management window on the live streaming room page, the management window including a plurality of controls configured to perform different processing on comments, and the plurality of controls including a fifth control which includes an entry for playing the first multimedia data; and in response to a trigger operation on the fifth control, display the third window, and play the first multimedia data in the third window.

In some embodiments, the live streaming room page includes a first area and a second area, and the comment corresponding to the first multimedia data is displayed in the first area. The plurality of controls in the management window also include a sixth control. The apparatus is also configured to: in response to a trigger operation on the sixth control, display a seventh control in the second area, the seventh control including the comment corresponding to the first multimedia data, and the comment corresponding to the first multimedia data including the entry for playing the first multimedia data.

In some embodiments, the first area is configured to display comments in the live streaming room. The apparatus is also configured to: highlight the comment corresponding to the first multimedia data in the first area.

In some embodiments, the apparatus is also configured to: in response to receiving the comment corresponding to the first multimedia data, display a prompt message corresponding to the first multimedia data in the first area.

In some embodiments, the apparatus is also configured to: in response to a hidden setting operation of the anchor, hide the first control on the live streaming room page of the sending end for comments.

For ease of description, the above apparatus is described in various modules according to their functions. Certainly, when implementing the present disclosure, the functions of each module can be implemented in the same or a plurality of software and/or hardware.

The apparatus of the above embodiment is configured to implement the corresponding method for receiving a comment in a live streaming room in any of the above embodiments, and has the beneficial effects of the corresponding method embodiments, which will not be repeated here.

Based on the same inventive concept, corresponding to any of the above embodiment methods, an embodiment of the present disclosure also provides a computer device configured to implement the methods described in the above embodiments. Fig. 8 shows a schematic diagram of the hardware structure of an exemplary computer device 600 provided in an embodiment of the present disclosure. The computer device 600 may be configured to implement the first terminals 102A-102C in Fig. 1, and may also be configured to implement the second terminal 106 in Fig. 1. In some scenarios, the computer device 600 may also be configured to implement the server 104 in Fig. 1.

As shown in Fig. 7, the computer device 600 may include: a processor 602, a memory 604, a network module 606, a peripheral interface 608, and a bus 610. The processor 602, the memory 604, the network module 606 and the peripheral interface 608 are communicatively connected to each other inside the computer device 600 via the bus 610.

The processor 602 may be a central processing unit (CPU), an image processor, a neural processing unit (NPU), a micro control unit (MCU), a programmable logic device, a digital signal processor (DSP), an application specific integrated circuit (ASIC), or one or more integrated circuits. The processor 602 may be configured to perform functions related to the techniques described in the present disclosure. In some embodiments, the processor 602 may also include a plurality of processors integrated into a single logical component. For example, as shown in Fig. 6, the processor 602 may include a plurality of processors 602a, 602b, and 602c.

The memory 604 may be configured to store data (e.g., instructions, computer code, etc.). As shown in Fig. 6, the data stored in the memory 604 may include program instructions (e.g., program instructions for implementing a method for detecting a frame rate in an embodiment of the present disclosure) and data to be processed (for example, the memory may store configuration files of other modules, etc.). The processor 602 may also access program instructions and data stored in the memory 604 and execute program instructions to operate on the data to be processed. The memory 604 may include a volatile storage device or a non-volatile storage device. In some embodiments, the memory 604 may include a random access memory (RAM), a read-only memory (ROM), an optical disk, a magnetic disk, a hard disk, a solid-state drive (SSD), a flash memory, a memory stick, etc.

The network interface 606 may be configured to provide the computer device 600 with communications with other external devices via a network. The network may be any wired or wireless network capable of transmitting and receiving data. For example, the network may be a wired network, a local wireless network (e.g., Bluetooth, WiFi, near field communication (NFC), etc.), a cellular network, the Internet, or a combination thereof. It is to be understood that the types of networks are not limited to the above specific examples.

The peripheral interface 608 may be configured to connect the computer device 600 to one or more peripheral apparatuses, so as to enable information input and output. For example, the peripheral apparatuses may include input devices such as a keyboard, a mouse, a touch pad, a touch screen, a microphone, and various sensors, as well as output devices such as a display, a speaker, a vibrator, and an indicator light.

The bus 610 may be configured to transmit information between various components of the computer device 600 (e.g., the processor 602, the memory 604, the network interface 606, and the peripheral interface 608), such as an internal bus (e.g., a processor-memory bus), and an external bus (a USB port, a PCI-E bus).

It should be noted that although the architecture of the above computer device 600 only shows the processor 602, the memory 604, the network interface 606, the peripheral interface 608 and the bus 610, in the specific implementation process, the architecture of the computer device 600 may also include other components necessary for normal operation. In addition, those skilled in the art may understand that the architecture of the above computer device 600 may only include components necessary to implement the solutions of the embodiments of the present disclosure, and does not necessarily include all the components shown in the figures.

Based on the same inventive concept, corresponding to any of the above embodiment methods, the present disclosure also provides a non-transitory computer-readable storage medium. The non-transitory computer-readable storage medium stores computer instructions, which are configured to cause the computer to execute the method for sending a comment in a live streaming room or the method for receiving a comment in a live streaming room as claimed in any of the above embodiments.

The computer-readable medium of this embodiment includes permanent and non-permanent, removable and non-removable media, and information storage can be implemented by any method or technology. The information may be computer-readable instructions, data structures, program modules or other data. Examples of the computer storage medium include, but are not limited to, a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technology, a compact disk-read-only memory (CD-ROM), a digital versatile disk (DVD) or other optical storage, a magnetic cassette, a magnetic tape magnetic disk storage or other magnetic storage device, or any other non-transmission medium that can be configured to store information that can be accessed by a computing device.

The computer instructions stored in the storage medium of the above embodiment are configured to cause the computer to execute the method described in any of the above embodiments, and have the beneficial effects of the corresponding method embodiments, which will not be repeated here.

On the basis of the same inventive concept, corresponding to any of the above embodiment methods, the present disclosure also provides a computer program product, which includes a computer program. In some embodiments, the computer program is executable by one or more processors to cause the processors to perform the method. Corresponding to the execution subject corresponding to each step in each embodiment of the method, the processor that executes the corresponding step may belong to the corresponding execution subject.

The computer program product of the above embodiment is configured to cause a processor to perform the method described in any of the above embodiments, and has the beneficial effects of the corresponding method embodiments, which will not be repeated here.

Those of ordinary skilled in the art should understand that the discussion of any of the above embodiments is merely illustrative and is not intended to imply that the scope of the present disclosure (including the claims) is limited to these examples. Based on the concept of the present disclosure, the technical features in the above embodiments or different embodiments may also be combined, the steps may be implemented in any order, and there are many other variations of different aspects of the embodiments of the present disclosure as described above, which variations are not provided in detail for the sake of simplicity.

In addition, to simplify illustration and discussion and not to obscure the embodiments of the present disclosure, well known power/ground connections to integrated circuit (IC) chips and other components may or may not be shown within the provided accompanying drawings. Furthermore, the apparatuses may be shown in the form of block diagrams so as to avoid obscuring the embodiments of the present disclosure, also taking into account the following fact that details regarding the implementations of these block diagram apparatuses are highly dependent on the platform on which the embodiments of the present disclosure are to be implemented (i.e., these details should be fully within the scope of understanding of those skilled in the art). In the case that specific details (e.g., circuits) are set forth to describe exemplary embodiments of the present disclosure, it will be apparent to those skilled in the art that the embodiments of the present disclosure may be implemented without these specific details or with variations of these specific details. Accordingly, these descriptions should be considered illustrative and not limiting.

Although the present disclosure has been described in conjunction with specific embodiments of the present disclosure, many substitutions, modifications, and variations of these embodiments will be apparent to those of ordinary skill in the art in light of the preceding description. For example, other memory architectures (e.g., dynamic RAM (DRAM)) may use the discussed embodiments.

The embodiments of the present disclosure are intended to cover all such substitutions, modifications, and variations that fall within the broad scope of the appended claims. Accordingly, any omissions, modifications, equivalent substitutions, improvements, etc. made within the spirit and principles of the embodiments of the present disclosure shall be included within the scope of protection of the present disclosure.

## Claims

1. A method for sending a comment in a live streaming room, comprising:
in response to a trigger operation on a first control on a live streaming room page, displaying a first window on the live streaming room page, the first window comprising identifiers of at least one piece of candidate multimedia data;
in response to a selection operation on an identifier of first multimedia data among the identifiers of the at least one piece of candidate multimedia data, determining, according to the selection operation, first multimedia data corresponding to the identifier of the first multimedia data; and
in response to a trigger operation on a second control on the live streaming room page, displaying on the live streaming room page a comment corresponding to the first multimedia data, the comment comprising an entry for playing the first multimedia data.

2. The method according to claim 1, wherein before responding to a trigger operation on a first control on a live streaming room page, the method further comprises:
in response to a trigger operation on a third control on the live streaming room page, displaying an information input window on the live streaming room page, and displaying the first control in the information input window.

3. The method according to claim 2, wherein before responding to a trigger operation on a first control on a live streaming room page, the method further comprises:
in response to the trigger operation on the third control, displaying an input method window of the third control on the live streaming room page;
the in response to a trigger operation on a first control on a live streaming room page, displaying a first window on the live streaming room page comprises:
in response to the trigger operation on the first control, switching the input method window to the first window.

4. The method according to claim 3, wherein the first window comprises at least one category tag; and the displaying a first window on the live streaming room page comprises:
in response to a trigger operation on a target tag in the at least one category tag, displaying in the first window an identifier of the candidate multimedia data matching the target tag.

5. The method according to claim 1, wherein after determining, according to the selection operation, first multimedia data corresponding to the identifier of the first multimedia data, the method further comprises:
displaying the second control in the first window.

6. The method according to claim 1, wherein after displaying on the live streaming room page a comment corresponding to the first multimedia data, the method further comprises:
in response to a trigger operation on the comment corresponding to the first multimedia data, displaying a second window to play the first multimedia data;
wherein the second window completely or partially covers the live streaming room page.

7. The method according to claim 6, further comprising:
in response to a sliding operation on the second window, switching the first multimedia data to second multimedia data and playing the second multimedia data;
wherein the second multimedia data is multimedia data adjacent to the first multimedia data in a playlist, the playlist comprises a list of multimedia data carried by comments in the live streaming room, and the multimedia data in the playlist are sorted by comment time.

8. The method according to any one of claims 1-7, wherein the live streaming room page comprises a first area and a second area, the first area comprises the comment corresponding to the first multimedia data and a comment corresponding to third multimedia data, and the comment corresponding to the third multimedia data is from a different sending end than the comment corresponding to the first multimedia data;
the method further comprises:
in response to the comment corresponding to the first multimedia data or the comment corresponding to the third multimedia data being topped by an anchor, displaying a fourth control in the second area, the fourth control comprising the comment corresponding to the first multimedia data or the comment corresponding to the third multimedia data, wherein the comment corresponding to the first multimedia data comprises an entry for playing the first multimedia data, or the comment corresponding to the third multimedia data comprises an entry for playing the third multimedia data.

9. The method according to claim 8, wherein the first area is configured to display comments in the live streaming room; the method further comprises:
highlighting the comment corresponding to the first multimedia data in the first area.

10. The method according to claim 8, further comprising:
in response to a trigger operation on the fourth control, displaying the second window on the live streaming room page, so as to play the first multimedia data or the third multimedia data;
wherein the second window completely or partially covers the live streaming room page.

11. The method according to claim 7 or 10, further comprising:
playing audio information corresponding to the live streaming room and audio information corresponding to the second window simultaneously.

12. A method for receiving a comment in a live streaming room, comprising:
displaying a comment corresponding to first multimedia data on a live streaming room page; and
in response to a trigger operation on the comment corresponding to the first multimedia data, displaying a third window on the live streaming room page, and playing the first multimedia data in the third window.

13. The method according to claim 12, wherein the in response to a trigger operation on the comment corresponding to the first multimedia data, displaying a third window on the live streaming room page, and playing the first multimedia data in the third window comprises:
in response to the trigger operation on the comment corresponding to the first multimedia data, displaying a management window on the live streaming room page, the management window comprising a plurality of controls configured to perform different processing on comments, and the plurality of controls comprising a fifth control which comprises an entry for playing the first multimedia data; and
in response to a trigger operation on the fifth control, displaying the third window, and playing the first multimedia data in the third window.

14. The method according to claim 13, wherein the live streaming room page comprises a first area and a second area, the comment corresponding to the first multimedia data is displayed in the first area, and the plurality of controls in the management window further comprise a sixth control;
after displaying the management window on the live streaming room page, the method further comprises:
in response to a trigger operation on the sixth control, displaying a seventh control in the second area, the seventh control comprising the comment corresponding to the first multimedia data, and the comment corresponding to the first multimedia data comprising the entry for playing the first multimedia data.

15. The method according to claim 14, wherein the first area is configured to display comments in the live streaming room; the method further comprises:
highlighting the comment corresponding to the first multimedia data in the first area.

16. The method according to claim 14, further comprising:
in response to receiving the comment corresponding to the first multimedia data, displaying a prompt message corresponding to the first multimedia data in the first area.

17. The method according to claim 12, further comprising:
in response to a hidden setting operation of the anchor, hiding the first control on the live streaming room page of the sending end for comments.

18. An apparatus for sending a comment in a live streaming room, comprising:
a first display module, configured to: in response to a trigger operation on a first control on a live streaming room page, display a first window on the live streaming room page, the first window comprising identifiers of at least one piece of candidate multimedia data;
a determination module, configured to: in response to a selection operation on an identifier of first multimedia data among the identifiers of the at least one piece of candidate multimedia data, determine, according to the selection operation, first multimedia data corresponding to the identifier of the first multimedia data; and
a second display module, configured to: in response to a trigger operation on a second control on the live streaming room page, display on the live streaming room page a comment corresponding to the first multimedia data, the comment comprising an entry for playing the first multimedia data.

19. An apparatus for receiving a comment in a live streaming room, comprising:
an acquisition module, configured to: display a comment corresponding to first multimedia data on a live streaming room page; and
a playback module, configured to: in response to a trigger operation on the comment corresponding to the first multimedia data, display a third window on the live streaming room page, and play the first multimedia data in the third window.

20. A computer device, comprising one or more processors, a memory, and one or more programs, wherein the one or more programs are stored in the memory and executed by the one or more processors, and the programs comprise instructions for executing the method according to any one of claims 1-11 or the method according to any one of claims 12-17.

21. A non-volatile computer-readable storage medium, containing a computer program, which, when executed by one or more processors, causes the processors to execute the method according to any one of claims 1-11 or the method according to any one of claims 12-17.

22. A computer program product, comprising computer program instructions, which, when run on a computer, cause the computer to execute the method according to any one of claims 1-11 or the method according to any one of claims 12-17.
